# EUROPÄISCHE PATENTANMELDUNG

(11) **EP 4 427 580 A1**
(43) Veröffentlichungstag der Anmeldung: **11.09.2024**
(21) Anmeldenummer: 23217027.4
(22) Anmeldetag: 15.12.2023
(51) Int. Cl.: A01F 29/06, A01F 29/22

(54) **SCHLEIFVORRICHTUNG FÜR HÄCKSELMESSER EINES HÄCKSELWERKS, HÄCKSELWERK UND VERFAHREN ZUM SCHLEIFEN DER HÄCKSELMESSER EINES HÄCKSELWERKS**

(30) Priorität: 07.03.2023 DE 102023105607
(71) Anmelder: CLAAS Saulgau GmbH, 88348 Bad Saulgau (DE)
(72) Erfinder: Kloker, Philipp, 88499 Emeringen (DE); Wehner, Gregor, 88356 Ostrach Unterweiler (DE); Spachtholz, Christian, 88370 Ebenweiler (DE); Fischer, Josef, 88400 Biberach (DE)
(74) Vertreter: Budach, Steffen

(57) **Zusammenfassung**

Schleifvorrichtung (110) für Häckselmesser (13) eines Häckselwerks (12) einer landwirtschaftlichen Erntemaschine, mit einem Schleifschlitten (111), der mit Hilfe eines ersten Aktuators (112) entlang einer gehäusefesten Führung (113) parallel zu einer Drehachse (19) einer die Häckselmesser (13) tragenden Häckseltrommel (11) des Häckselwerks (12), die an einem Gehäuse des Häckselwerks (11) drehbar gelagert ist, in Axialrichtung (A) der Häckseltrommel (11) verlagerbar ist, und mit einer an dem Schleifschlitten (111) montierten, einen Schleifstein (115) und eine Schleifsteinaufnahme (116) aufweisenden Schleifsteinbaugruppe (114), wobei zumindest der Schleifstein (115) in Radialrichtung (R) der Häckseltrommel (11) an die Häckselmesser (13) anstellbar ist, wobei mit der Schleifsteinbaugruppe (114) ein zusammen mit derselben und zusammen mit dem Schleifschlitten (111) entlang der gehäusefesten Führung (113) verlagerbarer zweiter Aktuator (118) wirkverbunden ist, und wobei über den zweiten Aktuator (118) an jeder Axialposition der Schleifsteinbaugruppe (114) entlang der Häckseltrommel (11) die Relativposition zumindest des Schleifsteins (115) zu den Häckselmessern (13) in Radialrichtung (R) der Häckseltrommel (11) variabel einstellbar ist.

## Beschreibung

Die Erfindung betrifft eine Schleifvorrichtung für Häckselmesser eines Häckselwerks, ein Häckselwerk und ein Verfahren zum Schleifen der Häckselmesser.

DE 41 28 483 C2 offenbart eine Schleifvorrichtung für Häckselmesser eines Häckselwerks einer landwirtschaftlichen Erntemaschine. Die Schleifvorrichtung verfügt über einen Schleifschlitten, der entlang einer gehäusefesten Führung parallel zu einer Drehachse einer die Häckselmesser tragenden Häckseltrommel des Häckselwerks, die an einem Gehäuse des Häckselwerks drehbar gelagert ist, verlagerbar ist. An dem Schleifschlitten der Schleifvorrichtung ist ein Schleifstein montiert. Der Schleifstein ist über eine ebenfalls am Schleifschlitten der Schleifvorrichtung montierte Spindel sowie über ein ebenfalls am Schleifschlitten montiertes und mit der Spindel zusammenwirkendes Klinkenrad radial zur Drehachse der Häckseltrommel an die Häckselmesser der Häckseltrommel anstellbar, und zwar im Zusammenspiel mit an der Gehäusewand des Gehäuses des Häckselwerks montierten Anschlägen, die mit dem am Schleifschlitten montierten Klinkenrad zusammenwirken. Dann, wenn sich der Schleifschlitten bei seiner Bewegung entlang der gehäusefesten Führung parallel zur Drehachse der Häckseltrommel in Richtung auf einen gehäusefesten Anschlag bewegt, kommt ein derartiger Anschlag in Eingriff mit dem Klinkenrad, wodurch das Klinkenrad und damit die mit dem Klinkenrad zusammenwirkende Spindel verdreht wird. Die Drehbewegung des Klinkenrads und der Spindel wird von der Spindel in eine Linearbewegung des Schleifsteins in Radialrichtung der Häckseltrommel umgesetzt, um so den Schleifstein radial zur Drehachse der Häckseltrommel an die Häckselmesser anzustellen.

DE 10 2016 101 834 A1 offenbart eine weitere Schleifvorrichtung für Häckselmesser eines Häckselwerks, bei welcher die Drehbewegung eines Klinkenrads in eine translatorische Verstellbewegung eines Schleifsteins umgesetzt wird, um den Schleifstein an Häckselmesser eines Häckselwerks anzustellen.

DE 10 2016 101 836 A1 offenbart ebenfalls eine Schleifvorrichtung für Häckselmesser eines Häckselwerks, wobei der Schleifstein in einer Schleifsteinbuchse aufgenommen ist. Die Einheit aus Schleifstein und Schleifsteinbuchse ist am Schleifschlitten montiert, der entlang einer gehäusefesten Führung parallel zur Drehachse der die Häckselmesser tragenden Häckseltrommel verlagerbar ist.

EP 3 020 269 B1 offenbart eine weitere Schleifvorrichtung für Häckselmesser eines Häckselwerks mit einer nicht geraden Führung für den Schleifschlitten.

Beim Schleifen der Häckselmesser einer Häckseltrommel wird nicht nur an den Häckselmessern Material abgetragen, sondern auch am Schleifstein der Schleifvorrichtung. Dies kann dazu führen, dass sich beim Schleifen ungewünschte Formen an den Häckselmessern und damit der Häckseltrommel ausbilden, die zu einem nicht gleichmäßigen Schneidspalt zwischen den Häckselmessern und einer mit den Häckselmessern zusammenwirkenden Gegenschneide des Häckselwerks führen. Hierdurch wird die beim Häckseln bereitstellbare Häckselqualität beeinträchtigt. Es besteht Bedarf an einer Schleifvorrichtung für Häckselmesser eines Häckselwerks, mithilfe derer Häckselmesser entlang ihrer Axialrichtung gleichmäßiger geschliffen werden können um ungewünschte Formen bzw. Konturen der Häckselmesser und damit der Häckseltrommel zu vermeiden und so letztendlich einen gleichförmigen Schneidspalt zwischen den Häckselmessern und einer mit denselben zusammenwirkenden Gegenschneide bereitzustellen.

Durch den beim Ernteprozess auftretenden Verschleiß können ebenfalls Formabweichungen an der Häckseltrommel entstehen.

Hiervon ausgehend liegt der vorliegenden Erfindung die Aufgabe zugrunde, eine neuartige Schleifvorrichtung, ein Häckselwerk einer landwirtschaftlichen Erntemaschine mit einer solchen Schleifvorrichtung und ein Verfahren zum Schleifen der Häckselmesser eines Häckselwerks zu schaffen.

Diese Aufgabe wird durch eine Schleifvorrichtung nach Anspruch 1 gelöst. Erfindungsgemäß ist mit der Schleifsteinbaugruppe ein zusammen mit derselben und zusammen mit dem Schleifschlitten entlang der gehäusefesten Führung verlagerbarer zweiter Aktuator wirkverbunden, über welchen an jeder Axialposition der Schleifsteinbaugruppe entlang der Häckseltrommel die Relativposition zumindest des Schleifsteins zu den Häckselmessern in Radialrichtung der Häckseltrommel variabel einstellbar ist.

Mit der Bezeichnung Schleifstein ist im Zusammenhang mit der vorliegenden Erfindung sowohl ein fest eingespannter Schleifstein, wie er aus dem zitierten Stand der Technik bekannt ist, als auch eine um eine Symmetrieachse drehend angetriebene Schleifscheibe zu verstehen. Auch wenn nachfolgend nur der Begriff Schleifstein verwendet wird, ist in allen beschriebenen und/oder beanspruchten Ausführungsbeispielen damit auch alternativ eine drehend angetriebene Schleifscheibe gemeint.

Mit der Schleifvorrichtung ist es erstmals möglich, entlang der gesamten Axialerstreckung der Häckseltrommel an jeder Axialposition der Schleifsteinbaugruppe relativ zur Häckseltrommel die Relativposition zumindest des Schleifsteins in Radialrichtung zu den Häckselmessern der Häckseltrommel variabel und damit individuell einzustellen. Ein ungleichmäßiger Materialabtrag an den Häckselmessern entlang der Axialrichtung der Häckseltrommel kann vermieden werden. Ungewünschte Formen bzw. Konturen der Häckselmesser und damit der Häckseltrommel können ebenfalls vermieden werden. Entlang der Axialrichtung kann ein gleichförmiger Schneidspalt zwischen den Häckselmessern und einer mit den Häckselmessern zusammenwirkenden Gegenschneide bereitgestellt werden.

Vorzugsweise ist über den zweiten Aktuator der Schleifstein relativ zur Schleifsteinaufnahme oder der Schleifstein zusammen mit der Schleifsteinaufnahme in Radialrichtung der Häckseltrommel verstellbar. Mit beiden Varianten ist es möglich, an jeder Axialposition der Schleifsteinbaugruppe entlang der Häckseltrommel die Relativposition des Schleifsteins zu den Häckselmessern in Radialrichtung variabel einzustellen.

Vorzugsweise ist der zweite Aktuator ein elektrischer Aktuator. Ein elektrischer Aktuator ist besonders bevorzugt, um an jeder Axialposition der Schleifsteinbaugruppe die Relativposition des Schleifsteins zu den Häckselmessern in Radialrichtung variabel einzustellen.

Vorzugsweise weist die Schleifvorrichtung eine Einrichtung zur Bestimmung einer Relativposition der Schleifsteinbaugruppe und/oder des Schleifsteins der Schleifsteinbaugruppe in Radialrichtung der Häckseltrommel und/oder zur Bestimmung einer Vorspannkraft zwischen dem Schleifstein und den Häckselmessern der Häckseltrommel auf. Vorzugsweise weist die Schleifvorrichtung ferner ein Steuergerät auf, welches abhängig von der Relativposition der Schleifsteinbaugruppe und/oder des Schleifsteins in Radialrichtung der Häckseltrommel und/oder abhängig von der Vorspannkraft zwischen dem Schleifstein und den Häckselmessern der Häckseltrommel den zweiten Aktuator derart ansteuert, dass entlang der gesamten Axialrichtung der Häckseltrommel die Vorspannkraft zwischen dem Schleifstein und den Häckselmessern konstant oder annährend konstant ist.

Das Steuergerät weist vorzugsweise eine Schnittstelle zur Aufnahme von Sensorinformationen über die Form der Häckseltrommel und Mittel zur Verarbeitung dieser Sensorinformationen auf.

Dann, wenn die Relativposition der Schleifsteinbaugruppe und/oder des Schleifsteins in Radialrichtung der Häckseltrommel und/oder die Vorspannkraft zwischen dem Schleifstein und den Häckselmessern der Häckseltrommel bestimmt wird und abhängig hiervon die Steuerungseinrichtung den zweiten Aktuator derart ansteuert, dass beim Schleifen entlang der gesamten Axialerstreckung der Häckseltrommel die Vorspannkraft zwischen dem Schleifstein und den Häckselmessern konstant oder annähernd konstant ist, ist ein besonders vorteilhaftes Schleifen der Häckselmesser der Häckseltrommel möglich. So kann dann besonders vorteilhaft eine unerwünschte Form bzw. Kontur an den Häckselmessern der Häckseltrommel vermieden werden. Es kann besonders vorteilhaft ein gleichförmiger Schneidspalt zwischen den Häckselmessern und einer mit den Häckselmessern zusammenwirkenden Gegenschneide bereitgestellt werden.

Das Steuergerät kann die Informationen über die Bewegungen des Aktors und die Positionsdaten in Axialrichtung miteinander verarbeiten und darauf basierend die Form der Häckseltrommel definiert weggesteuert beeinflussen. Dazu generiert das Steuergerät entsprechende Steuersignale für den Aktuator zur Positionseinstellung des Schleifsteins in radialer Richtung als auch Steuersignale für einen Aktuator zur axialen Positionierung der Schleifsteinbaugruppe. Das Steuergerät kann vorzugsweise auch die Drehzahl der Häckseltrommel und falls der Schleifstein als rotierende Schleifscheibe ausgeführt ist auch deren Drehzahl beeinflussen.

Um einen gleichmäßigen oder auch definiert ungleichmäßigen Abtrag über die gesamte Breite der Häckseltrommel zu gewährleisten ist es auch möglich, dass das Steuergerät die Aktuatoren zur axialen Positionierung, Zustellung des Schleifsteins und Drehzahlen so ansteuert und/oder regelt, dass der Auflagedruck des Schleifsteins variabel auf vorbestimmte Werte eingestellt werden kann.

Durch eine variable Zustellung des Schleifsteins und die Informationen des Steuergerätes, kann die Verfahrgeschwindigkeit in axialer Richtung gezielt eingesetzt werden, um in vorbestimmten Bereichen langsamer oder schneller zu verfahren, um dadurch mehr bzw. weniger Material abzutragen.

Ein erfindungsgemäßes Häckselwerk mit einer Schleifvorrichtung ist in Anspruch 10 definiert.

Das Verfahren zum Schleifen der Häckselmesser eines Häckselwerks ist in Anspruch 11 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine stark schematisierte Darstellung einer Schleifvorrichtung nach dem Stand der Technik;
- Fig. 2: eine sich unter Verwendung der Schleifvorrichtung der Fig. 1 ergebende Kontur von Häckselmessers einer Häckseltrommel;
- Fig. 3: eine stark schematisierte Darstellung einer erfindungsgemäßen Schleifvorrichtung; und
- Fig. 4: eine sich unter Verwendung der erfindungsgemäßen Schleifvorrichtung ergebende Kontur von Häckselmessers einer Häckseltrommel.

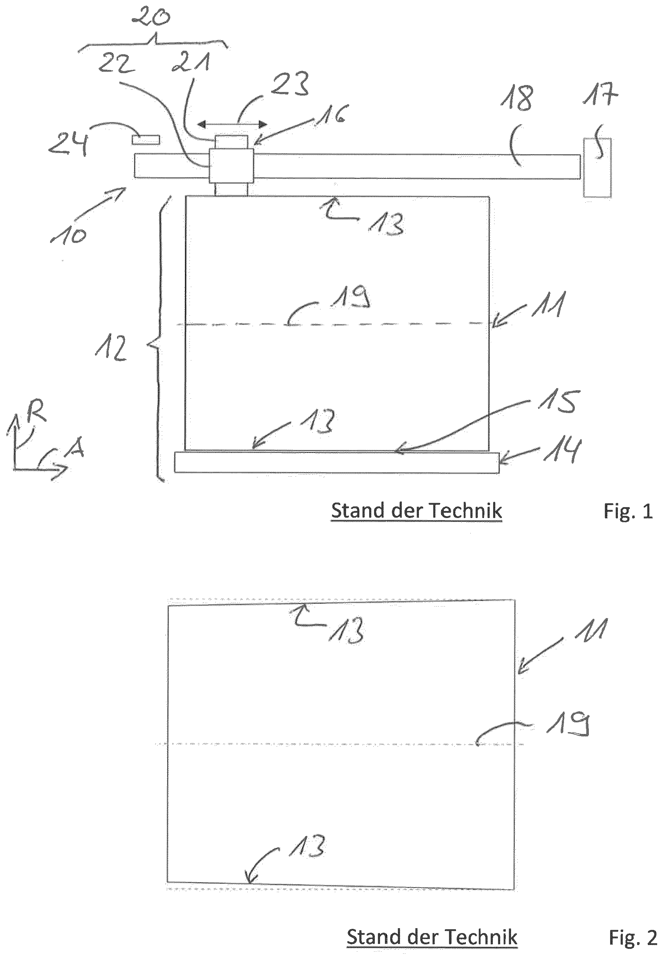

Fig. 1 zeigt stark schematisiert eine aus dem Stand der Technik bekannte Schleifvorrichtung 10 zum Schleifen von Häckselmessern 13 einer Häckseltrommel 11 eines Häckselwerks 12 einer landwirtschaftlichen Erntemaschine, insbesondere eines Feldhäckslers. Die Häckseltrommel 11 trägt radial außen die Häckselmesser 13, die eine Außenkontur bzw. Außenform der Häckseltrommel 11 definieren. Die Häckselmesser 13 wirken mit einer feststehenden Gegenschneide 14 des Häckselwerks 12 zusammen, wobei zwischen den Häckselmessern 13 der im Betrieb drehend angetriebenen Häckseltrommel 11 und der feststehenden Gegenschneide 14 ein Schneidspalt 15 ausgebildet ist.

Die Häckselmesser 13 der Häckseltrommel 11 können im Betrieb verschleißen. Um einen solchen Verschleiß der Häckselmesser 13 auszugleichen, dient die Schleifvorrichtung 10. Die Häckselmesser 13 können über die Schleifvorrichtung 10 geschliffen werden.

Die Schleifvorrichtung 10 verfügt über einen Schleifschlitten 16, der mithilfe eines ersten Aktuators 17 entlang einer gehäusefesten Führung 18 parallel zu einer Drehachse 19 der die Häckselmesser 13 tragenden Häckseltrommel 11 verlagerbar ist. Die Drehachse 19 erstreckt sich in Axialrichtung Ader Häckseltrommel 11.

Der Schleifschlitten 16 trägt dabei eine Schleifsteinbaugruppe 20 aus einem Schleifstein 21 und einer Schleifsteinaufnahme 22. Die Schleifsteinbaugruppe 20 ist über den Schleifschlitten 16 im Sinne des Doppelpfeils 23 entlang der Führung 18 parallel zur Drehachse 19 der Häckseltrommel 11 und damit in Axialrichtung A derselben verlagerbar. Hierdurch können die Häckselmesser 13 über ihre Axialerstreckung geschliffen werden.

Bei der Schleifvorrichtung 10 des Standes der Technik gemäß Fig. 1 ist an einer axialen Seite der gehäusefesten Führung 18 ein gehäusefester Anschlag 24 vorgesehen, der im Zusammenspiel mit der Schleifsteinbaugruppe 20 ein Anstellen des Schleifsteins 21 radial zur Drehachse 19 der Häckseltrommel 11 und damit in Radialrichtung R der Häckseltrommel 11 ermöglicht.

Dies ist zum Beispiel aus DE 41 28 493 C2 oder DE 10 2016 101 834 A1 bekannt.

Während des Schleifvorgangs mit der Schleifvorrichtung 10 der Fig. 1 bleibt nach einem Anstellen des Schleifsteins 21 in Radialrichtung R der Häckseltrommel 11 an die Häckselmesser 13 die radiale Relativposition zwischen dem Schleifstein 21 und den Häckselmessern 13 und damit der Häckseltrommel 11 unverändert.

Beim Schleifen wird nicht nur an den Häckselmessern 13, sondern auch am Schleifstein 21, Material abgetragen. Dadurch kann sich die in Fig. 2 gezeigte Kontur bzw. Form an den Häckselmessern 13 beim Schleifen ausbilden, die gegenüber der Axialrichtung schräggestellt ist. So zeigt Fig. 2, dass beim Schleifen mit der Schleifvorrichtung 10 der Fig. 1 an derjenigen Seite der Häckselmesser 13, im Bereich derer der Anschlag 24 angeordnet ist, beim Schleifen mehr Material von den Häckselmessern 13 abgetragen wird als an der gegenüberliegenden Seite. Dies sorgt für eine unerwünschte Kontur bzw. Form an den Häckselmessern 13 der Häckseltrommel 11 und letztendlich für einen ungleichförmigen Schneidspalt 15 zwischen den geschliffenen Häckselmessern 13 und der Gegenschneide 14 des Häckselwerks 12.

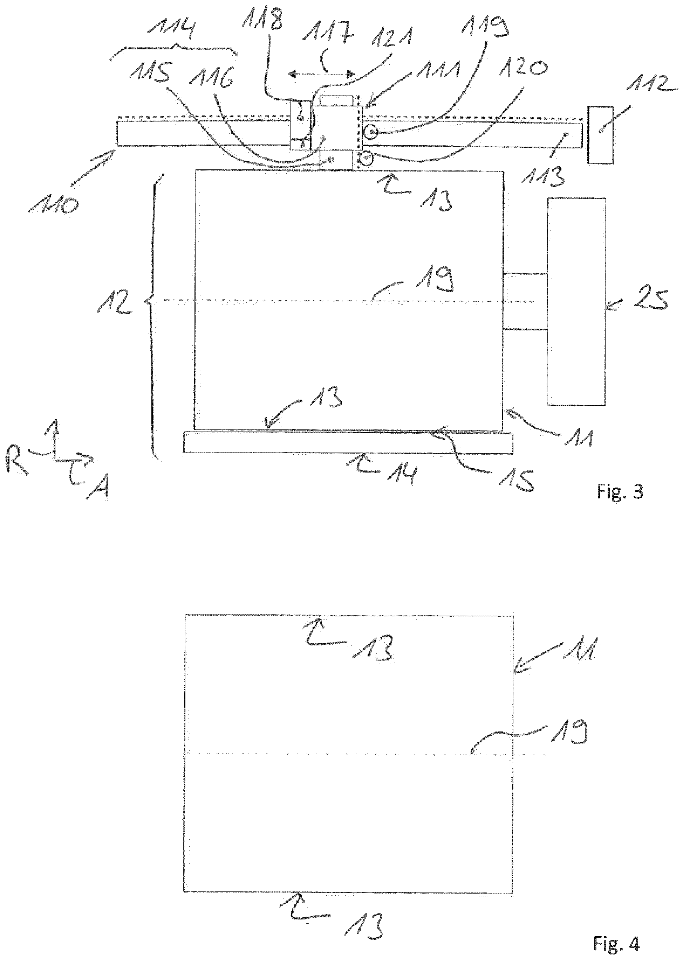

Fig. 3 zeigt stark schematisiert eine erfindungsgemäße Schleifvorrichtung 110 zusammen mit einer Häckseltrommel 11 eines Häckselwerks 12 einer landwirtschaftlichen Erntemaschine, insbesondere eines Feldhäckslers.

Die Häckseltrommel 11 trägt radial außen wiederum Häckselmesser 13, die mit der erfindungsgemäßen Schleifvorrichtung 110 geschliffen werden können, um einen Verschleiß derselben auszugleichen. Die Häckselmesser 13 der Häckseltrommel 11 wirken wiederum mit einer feststehenden Gegenschneide 14 des Häckselwerks 12 zusammen, wobei zwischen den Häckselmessern 13 und der feststehenden Gegenschneide 14 ein Schneidspalt 15 ausgebildet ist.

Im Betrieb sowie während eines Schleifvorgangs ist die Häckseltrommel 11 um ihre Drehachse 19 rotierbar bzw. drehbar, wobei sich die Drehachse 19 in Axialrichtung A der Häckseltrommel 11 erstreckt. Fig. 3 zeigt einen Antrieb 25 für die Häckseltrommel 11 des Häckselwerks 12, um die Häckseltrommel 11 im Betrieb sowie während eines Schleifvorgangs um die Drehachse 19 derselben drehend anzutreiben.

Die erfindungsgemäße Schleifvorrichtung 110 verfügt über einen Schleifschlitten 111, der mithilfe eines ersten Aktuators 112 entlang einer gehäusefesten Führung 113 parallel zur Drehachse 19 der Häckseltrommel 11 in Axialrichtung A derselben verlagerbar ist.

An dem Schleifschlitten 111 ist eine Schleifsteinbaugruppe 114 montiert, die einen Schleifstein 115 und eine Schleifsteinaufnahme 116 umfasst. Die Schleifsteinbaugruppe 114 ist über den Schleifschlitten 111 entlang der Führung 113 mithilfe des ersten Aktuators 112 im Sinne des Doppelpfeils 117 in Axialrichtung A und damit parallel zur Drehachse 19 der Häckseltrommel 11 verlagerbar, um letztendlich die Häckselmesser 13 der Häckseltrommel 11 entlang ihrer Axialrichtung zu schleifen.

Mit der Schleifsteinbaugruppe 111 der erfindungsgemäßen Schleifvorrichtung 110 ist ein zweiter Aktuator 118 wirkverbunden, der zusammen mit dem Schleifschlitten 111 und der Schleifsteinbaugruppe 114 entlang der gehäusefesten Führung 113 verlagerbar ist.

Über diesen zweiten Aktuator 118 ist an jeder Axialposition der Schleifsteinbaugruppe 114 entlang der Häckseltrommel 11 die Relativposition zumindest des Schleifsteins 115 in Radialrichtung R der Häckseltrommel 11 zu den Häckselmessern 13 der Häckseltrommel 11 variabel einstellbar. Über die gesamte Axialerstreckung der Häckseltrommel 11 kann demnach mit Hilfe des zweiten Aktuators 118 die Relativposition zumindest des Schleifsteins 115 in Radialrichtung R der Häckseltrommel 11 variabel und damit individuell eingestellt werden.

Bei der erfindungsgemäßen Schleifvorrichtung 110 kann demnach an jeder Axialposition entlang der Axialrichtung A der Häckseltrommel 11 und damit der Häckselmesser 13 die radiale Relativposition zumindest des Schleifsteins 115 zu den Häckselmessern 13 variabel und damit individuell eingestellt werden. Hierdurch kann beim Schleifen der Häckselmesser 13 eine Kontur der Häckseltrommel 11 bereitgestellt werden, wie sie in Fig. 4 gezeigt ist. Die Kontur der sich in Axialrichtung erstreckenden Häckselmesser 13 verläuft dabei in Axialrichtung und ist nicht gegenüber der Axialrichtung schräggestellt, sodass auch geschliffene Häckselmesser 13 einen gleichförmigen Schneidspalt 15 zu der feststehenden Gegenschneide 14 aufweisen.

Mit Hilfe der Informationen über den Istzustand der Häckseltrommel 11 und der Möglichkeit die Form der Häckseltrommel 11 definiert anzupassen, liegt immer ein vorteilhaft gleichmäßiger Schneidspalt vor.

Durch die erfindungsgemäße Möglichkeit, den Schleifstein 21 variabel in radialer Richtung an die Häckseltrommel 11 bzw. die Häckselmesser 13 anzustellen oder abzuheben, kann der Schleifstein 21 erst dann die Häckselmesser 13 angestellt werden, wenn alle Voraussetzungen für einen Schleifvorgang erfüllt sind. Des Weiteren kann der Schleifstein21 auch am Umkehrpunkt der Axialbewegung von den Häckselmessern 13 abgehoben werden. Daraus ergeben sich eine Reihe von Vorteilen, wie ein geringerer Verschleiß am Schleifstein 21 und/oder weniger Ausbrüche beim Einfahren sowie eine Verlängerung der Standzeit der Häckselmesser 13, weil diese am Umkehrpunkt nicht überhitzt werden.

In einer ersten Ausführungsform der Erfindung ist es möglich, dass der zweite Aktuator 118 den Schleifstein 115 relativ zur Schleifsteinaufnahme 116 in Radialrichtung R der Häckseltrommel 11 verstellt.

In einer zweiten Variante ist es möglich, dass der zweite Aktuator 118 den Schleifstein 115 zusammen mit der Schleifsteinaufnahme 116 in Radialrichtung der Häckseltrommel 11 verstellt, nämlich relativ zum Schleifschlitten 111.

Vorzugsweise handelt es sich beim zweiten Aktuator 118 um einen elektrischen Aktuator. Mit einem solchen elektrischen Aktuator ist es auf besonders vorteilhafte Art und Weise möglich, an jeder axialen Relativposition der Schleifsteinbaugruppe 114 relativ zur Häckseltrommel 11 in Radialrichtung R der Häckseltrommel 11 die Relativposition den Schleifstein 115 zu den Häckselmessern 13 der Häckseltrommel 11 variabel und damit individuell einzustellen. Der zweite Aktuator 118 kann aber beispielsweise alternativ als ein hydraulisch angetriebener Aktuator ausgeführt werden.

Auch beim ersten Aktuator 112 handelt es sich vorzugsweise auch um einen elektrischen Aktuator, welcher einen Vorschub der Schleifsteinbaugruppe 114 bzw. des Schleifschlittens 111 parallel zur Axialrichtung A entlang der Führung 113 variabel einstellt.

Im gezeigten, bevorzugten Ausführungsbeispiel der Fig. 3 weist die erfindungsgemäße Schleifvorrichtung 110 eine Einrichtung 119 zur Bestimmung einer Relativposition der Schleifsteinbaugruppe 114 bzw. des Schleifschlittens 111 in Axialrichtung A der Häckseltrommel 11 entlang der Führung 113 und damit entlang der Häckseltrommel 11 auf.

Ferner verfügt im gezeigten, bevorzugten Ausführungsbeispiel der Fig. 3 die erfindungsgemäße Schleifvorrichtung 10 über eine Einrichtung 120 zur Bestimmung einer Relativposition der Schleifsteinbaugruppe 114 oder des Schleifsteins 115 der Schleifsteinbaugruppe 114 in Radialrichtung R der Häckseltrommel 11 und/oder zur Bestimmung einer Vorspannkraft zwischen dem Schleifstein 115 und den Häckselmessern 13 der Häckseltrommel 11.

Der erste Aktuator 112 und der zweite Aktuator 118 können vorzugsweise auch die auf sie wirkenden Kräfte ermitteln. Der erste Aktuator 112 kann die Vorschubkräfte ermitteln, welche beim Vorschub bzw. beim Bewegen der Schleifsteinbaugruppe 114 bzw. des Schleifschlittens 111 parallel zur Axialrichtung A entlang der Führung 113 auftreten. Der zweite Aktuator 118 kann insbesondere die Vorspannkraft ermitteln, die zwischen dem Schleifstein 115 und den Häckselmessern 13 aufgebaut wird.

Vorzugsweise weist die erfindungsgemäße Schleifvorrichtung 110 weiterhin ein Steuergerät 121 auf. Das Steuergerät 121 kann datentechnisch mit den Aktuatoren 112, 118 verbunden sein, um die von diesen erfassten Kräfte aufzunehmen und zu verarbeiten.

Das Steuergerät 121 ist eingerichtet, abhängig von der Relativposition der Schleifsteinbaugruppe 114 oder des Schleifsteins 115 in Radialrichtung R der Häckseltrommel 11 und/oder abhängig von der Vorspannkraft zwischen dem Schleifstein 115 und den Häckselmessern 13 der Häckseltrommel 11 den zweiten Aktuator 118 derart anzusteuern, dass entlang der gesamten Axialrichtung A der Häckseltrommel 11 beim Schleifen die Vorspannkraft zwischen dem Schleifstein 115 und den Häckselmessern 13 der Häckseltrommel 11 konstant oder annähernd konstant ist.

Annähernd konstant bedeutet, dass die Vorspannkraft um nicht mehr als einen definierten Betrag um einen Mittelwert schwankt, zum Beispiel um nicht mehr als 5%.

Das Steuergerät 121 kann die Informationen über die Bewegungen des Aktors 118 und die Positionsdaten in Axialrichtung miteinander verarbeiten und darauf basierend die Form der Häckseltrommel 11 definiert weggesteuert beeinflussen. Dazu generiert das Steuergerät 121 entsprechende Steuersignale für den zweiten Aktuator 118 zur Positionseinstellung des Schleifsteins in radialer Richtung als auch Steuersignale für den Aktuator 112 zur axialen Positionierung der Schleifsteinbaugruppe 114. Das Steuergerät 121 kann vorzugsweise auch die Drehzahl der Häckseltrommel 11 und falls der Schleifstein 115 als rotierende Schleifscheibe ausgeführt ist auch deren Drehzahl beeinflussen.

Zur radialen Zustellung des Schleifsteins 115 an die zu schleifenden Häckselmesser 13 dient demnach bei der erfindungsgemäßen Schleifvorrichtung 110 der zweite Aktuator 118, welcher entlang der gesamten Axialrichtung A der Häckseltrommel 11 die radiale Relativposition des Schleifsteins 115 zu den Häckselmessern 13 variabel und damit individuell einstellen kann. Dies erfolgt derart, dass bei einem Schleifvorgang die Vorspannkraft zwischen dem Schleifstein 115 und den zu schleifenden Häckselmessern 13 der Häckseltrommel 11 über die gesamte Axialerstreckung der Häckseltrommel 11 konstant oder annähernd konstant ist. Hierzu tauscht das Steuergerät 121 der Schleifvorrichtung 110 zumindest mit der Einrichtung 120 Daten aus. Wie bereits ausgeführt, kann über den ersten Aktuator 112 der Vorschub bzw. die Vorschubgeschwindigkeit des Schleifschlittens 111 und damit der Schleifsteinbaugruppe 114 entlang der Führung 113 variabel eingestellt werden.

Das Steuergerät 121 kann mit Sensoren gekoppelt sein, welche die Ist-Form der Häckseltrommel 11 erfassen, mit der vorgegebenen Soll-Form vergleichen sowie daraus Steuersignale ableiten, um den ersten Aktuator 112 und den zweiten Aktuator 118 damit anzusteuern.

Mit der erfindungsgemäßen Schleifvorrichtung 110 ist es möglich, die Häckselmesser 13 der Häckseltrommel 11 so zu schleifen, dass nach dem Schleifen eine Kontur der Häckseltrommel 11 vorliegt, die über die Axialrichtung derselben einen gleichförmigen Schneidspalt 15 zwischen den Häckselmessern 13 und der Gegenschneide 14 bereitstellt. Hierdurch kann die Häckselqualität verbessert werden. Ferner wird beim Schleifen sowohl an den Häckselmessern 13 als auch am Schleifstein 15 weniger Material abgetragen, wodurch die Lebensdauer des Schleifsteins 115 sowie der Häckselmesser 13 erhöht werden kann.

Die Erfindung betrifft weiterhin ein Häckselwerk 12 mit einer solchen Schleifvorrichtung 110 sowie einen Feldhäcksler mit einem solchen Häckselwerk 12.

Ferner betrifft die Erfindung ein Verfahren zum Schleifen der Häckselmesser 13 einer Häckseltrommel 11 unter Verwendung der oben beschriebenen, erfindungsgemäßen Schleifvorrichtung 110. Beim erfindungsgemäßen Verfahren wird die Relativposition des Schleifsteins 115 der Schleifsteinbaugruppe 114 in Radialrichtung R der Häckseltrommel 11 und/oder eine Vorspannkraft zwischen dem Schleifstein 114 und den Häckselmessern 13 der Häckseltrommel 11 bestimmt und abhängig hiervon der zweite Aktuator 118, der über den ersten Aktuator 112 zusammen mit der Schleifsteinbaugruppe 114 entlang der Axialrichtung A der Häckseltrommel 11 verlagert wird, derart angesteuert, dass beim Schleifen entlang der gesamten Axialrichtung A der Häckseltrommel 11 die Vorspannkraft zwischen dem Schleifstein 115 und den Häckselmessern 13 konstant oder annähernd konstant ist.

Durch die variable Zustellungsmöglichkeit des Schleifsteins 115 ist es möglich, unterschiedliche Schleifverfahren, wie z.B. Schruppen, Schlichten, Einschleifen, anzuwenden. Diese können je nach Bedarf miteinander gekoppelt oder einzeln ausgeführt werden.

### Bezugszeichenliste

- 10: Schleifvorrichtung
- 11: Häckseltrommel
- 12: Häckselwerk
- 13: Häckselmesser
- 14: Gegenschneide
- 15: Schneidspalt
- 16: Schleifschlitten
- 17: Aktuator
- 18: Führung
- 19: Drehachse
- 20: Schleifsteinbaugruppe
- 21: Schleifstein
- 22: Schleifsteinaufnahme
- 23: Doppelpfeil
- 24: Anschlag
- 25: Antrieb

- 110: Schleifvorrichtung
- 111: Schleifschlitten
- 112: erster Aktuator
- 113: Führung
- 114: Schleifsteinbaugruppe
- 115: Schleifstein
- 116: Schleifsteinaufnahme
- 117: Doppelpfeil
- 118: zweiter Aktuator
- 119: Einrichtung zur Positionsbestimmung
- 120: Einrichtung zur Positionsbestimmung
- 121: Steuergerät

## Patentansprüche

1. Schleifvorrichtung (110) für Häckselmesser (13) eines Häckselwerks (12) einer landwirtschaftlichen Erntemaschine,
mit einem Schleifschlitten (111), der mit Hilfe eines ersten Aktuators (112) entlang einer gehäusefesten Führung (113) parallel zu einer Drehachse (19) einer die Häckselmesser (13) tragenden Häckseltrommel (11) des Häckselwerks (12), die an einem Gehäuse des Häckselwerks (11) drehbar gelagert ist, in Axialrichtung (A) der Häckseltrommel (11) verlagerbar ist,
mit einer an dem Schleifschlitten (111) montierten, einen Schleifstein (115) und eine Schleifsteinaufnahme (116) oder eine drehend angetriebene Schleifscheibe aufweisende Schleifsteinbaugruppe (114), wobei zumindest der Schleifstein (115) bzw. die Schleifscheibe in Radialrichtung (R) der Häckseltrommel (11) an die Häckselmesser (13) anstellbar ist,
**dadurch gekennzeichnet, dass**
mit der Schleifsteinbaugruppe (114) ein zusammen mit derselben und zusammen mit dem Schleifschlitten (111) entlang der gehäusefesten Führung (113) verlagerbarer zweiter Aktuator (118) wirkverbunden ist,
über den zweiten Aktuator (118) an jeder Axialposition der Schleifsteinbaugruppe (114) entlang der Häckseltrommel (11) die Relativposition zumindest des Schleifsteins (115) zu den Häckselmessern (13) in Radialrichtung (R) der Häckseltrommel (11) variabel einstellbar ist.

2. Schleifvorrichtung (110) nach Anspruch 1, **dadurch gekennzeichnet, dass** über den zweiten Aktuator (118) der Schleifstein (115) relativ zur Schleifsteinaufnahme (116) in Radialrichtung (R) der Häckseltrommel (11) variabel verstellbar ist.

3. Schleifvorrichtung (110) nach Anspruch 1, **dadurch gekennzeichnet, dass** über den zweiten Aktuator (118) der Schleifstein (115) zusammen mit der Schleifsteinaufnahme (116) in Radialrichtung (R) der Häckseltrommel (11) variabel verstellbar ist.

4. Schleifvorrichtung (110) nach einem der Ansprüche 1 bis 3, **dadurch gekennzeichnet, dass** der zweite Aktuator (118) ein elektrischer oder ein hydraulisch angetriebener Aktuator ist.

5. Schleifvorrichtung (110) nach einem der Ansprüche 1 bis 4, **dadurch gekennzeichnet, dass** der erste Aktuator (112) einen Vorschub der Schleifsteinbaugruppe (114) in Axialrichtung der Häckseltrommel (11) variabel einstellt.

6. Schleifvorrichtung (110) nach einem der Ansprüche 1 bis 5, **dadurch gekennzeichnet, dass** der erste Aktuator (112) ein elektrischer Aktuator ist.

7. Schleifvorrichtung (110) nach einem der Ansprüche 1 bis 6, **gekennzeichnet durch** eine Einrichtung (119) zur Bestimmung einer Relativposition der Schleifsteinbaugruppe (114) und/oder des Schleifschlittens (111) in Axialrichtung der Häckseltrommel (11).

8. Schleifvorrichtung (110) nach einem der Ansprüche 1 bis 7, **gekennzeichnet durch** eine Einrichtung (120) zur Bestimmung einer Relativposition der Schleifsteinbaugruppe (114) und/oder des Schleifsteins (115) der Schleifsteinbaugruppe (114) in Radialrichtung der Häckseltrommel (11) und/oder zur Bestimmung einer Vorspannkraft zwischen dem Schleifstein (115) und den Häckselmessern (13) der Häckseltrommel (11) und/oder zur Bestimmung von Vorschubkräften, die beim Bewegen der Schleifsteinbaugruppe (114) in Axialrichtung auftreten.

9. Schleifvorrichtung (110) nach Anspruch 8, **gekennzeichnet durch** ein Steuergerät (121), welches abhängig von der Relativposition der Schleifsteinbaugruppe (114) und/oder des Schleifsteins (115) in Radialrichtung der Häckseltrommel (11) und/oder abhängig von der Vorspannkraft zwischen dem Schleifstein (115) und den Häckselmessern (13) der Häckseltrommel (11) den zweiten Aktuator (118) derart ansteuert, dass bei einem Schleifvorgang entlang der gesamten Axialrichtung der Häckseltrommel (11) die Vorspannkraft zwischen dem Schleifstein (115) und den Häckselmessern (13) konstant oder annährend konstant ist.

10. Häckselwerk (12) einer landwirtschaftlichen Erntemaschine, insbesondere eines Feldhäckslers, mit einer Häckselmesser (13) tragenden Häckseltrommel (11), die an einem Gehäuse des Häckselwerks (12) drehbar gelagert ist, **gekennzeichnet durch** eine Schleifvorrichtung (110) nach einem Ansprüche 1 bis 9.

11. Verfahren zum Schleifen der Häckselmesser (13) eines Häckselwerks (12) mit einer Schleifvorrichtung (110) nach einem der Ansprüche 1 bis 9, wobei eine Relativposition der Schleifsteinbaugruppe (114) und/oder des Schleifsteins (115) der Schleifsteinbaugruppe (114) in Radialrichtung der Häckseltrommel (11) und/oder einer Vorspannkraft zwischen dem Schleifstein (115) und den Häckselmessern (13) der Häckseltrommel (11) bestimmt wird und abhängig hiervon der zweite Aktuator (118) derart ansteuert wird, dass bei einem Schleifvorgang entlang der gesamten Axialrichtung der Häckseltrommel (11) die Vorspannkraft zwischen dem Schleifstein (115) und den Häckselmessern (13) konstant oder annährend konstant ist.

12. Verfahren zum Schleifen der Häckselmesser (13) eines Häckselwerks (12) mit einer Schleifvorrichtung (110) nach einem der Ansprüche 1 bis 9, wobei die Bewegungen des zweiten Aktors (118) und die Positionsdaten in Axialrichtung miteinander verarbeitet und darauf basierend die Form der Häckseltrommel (11) definiert weggesteuert beeinflusst werden.
